**Europäisches Patentamt**

(19) **European Patent Office**

**Office européen des brevets**

(11) Veröffentlichungsnummer: **0 100 007**
**B1**

(12) # EUROPÄISCHE PATENTSCHRIFT

(45) Veröffentlichungstag der Patentschrift:
**28.01.87**

(21) Anmeldenummer: **83106682.4**

(22) Anmeldetag: **07.07.83**

(51) Int. Cl.⁴: **C 02 F 3/12,** C 02 F 3/06,
C 02 F 3/10

(54) Verfahren und Vorrichtung zur biologischen Reinigung von Abwasser.

(30) Priorität: **29.07.82 DE 3228365**

(43) Veröffentlichungstag der Anmeldung:
**08.02.84 Patentblatt 84/6**

(45) Bekanntmachung des Hinweises auf die Patenterteilung:
**28.01.87 Patentblatt 87/5**

(84) Benannte Vertragsstaaten:
**AT BE CH DE FR GB IT LI NL SE**

(56) Entgegenhaltungen:
**EP - A - 0 025 309**
**US - A - 2 071 591**
**US - A - 3 956 128**
**US - A - 3 968 034**
**US - A - 4 055 490**
**US - A - 4 137 171**

(73) Patentinhaber: **Linde Aktiengesellschaft,
Abraham-Lincoln-Strasse 21, D-6200 Wiesbaden (DE)**

(72) Erfinder: **Fuchs, Uwe, Ing. grad.,
Helterwangerstrasse 46, D-8000 München 70 (DE)**
Erfinder: **Wildmoser, Alfred, Dipl.-Ing., Flurstrasse 12,
D-8013 Haar (DE)**

(74) Vertreter: **Schaefer, Gerhard, Dr., Linde
Aktiengesellschaft Zentrale Patentabteilung,
D-8023 Höllriegelskreuth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur biologischen Reinigung von Abwasser, bei dem das Abwasser in einem Reaktor in Gegenwart von Schlamm gegebenenfalls unter Begasung mit Luft und/oder Sauerstoff behandelt, anschliessend das Abwasser-Belebtschlamm-Gemisch nach der Behandlungszone durch eine im Reaktor vorhandene, Trägerteilchen enthaltende Filterzone zwecks Abscheidung der Biomasse auf den Trägerteilchen geleitet wird, die beladenen Trägerteilchen im Bereich der Filterzone regeneriert werden und gereinigtes Abwasser sowie von den Trägerteilchen bei der Regenerierung entfernte Biomasse getrennt aus der Filterzone abgezogen werden, sowie eine Vorrichtung zur Durchführung des Verfahrens.

Bei herkömmlichen biologischen Abwasserreinigungsverfahren, wie Belebungs-, Nitrifikationsoder Denitrifikationsverfahren, ist es erforderlich, die durch die Tätigkeit von speziellen, im Abwasser suspendierten Mikroorganismen entstehende Biomasse sowie im zulaufenden Abwasser enthaltene Feststoffe in nachgeschalteten Nachkläreinrichtungen aus dem gereinigten Abwasser abzuscheiden. Auch bei neueren Abwasserreinigungsverfahren, bei denen die für den biologischen Umsatz verantwortlichen Mikroorganismen auf Trägermaterialien, wie beispielsweise Sand, Aktivkohle oder Schaumstoffteilchen fixiert sind, ist die Nachschaltung einer Nachkläreinrichtung und/oder einer Regeneriereinrichtung für die Trägerteilchen insofern notwendig, als es bei Überschreitung einer gewissen Schmutzfracht zur unerwünschten Bildung nicht fixierter Biomasse kommt, die bei Nichtvorhandensein einer Nachklärung die Ablaufqualität des gereinigten Abwassers beeinträchtigt. Die Anordnung einer Nachkläreinrichtung oder einer nachgeschalteten Regeneriereinrichtung für die Trägerteilchen ist aber in jedem Fall aufwendig und beansprucht einen zusätzlichen Flächenbedarf. Ein entsprechendes Verfahren ist in der US-A 4 055 490 beschrieben.

Aus der US-A 3 968 034 ist darüber hinaus ein Verfahren zur biologischen Reinigung von Abwasser bekannt, bei dem das Abwasser in einem Reaktor nacheinander in einer normalen Belebtschlammzone, anschliessend in einer belüfteten Filterzone mit einem bewegten Filterbett und daran anschliessend in einer unbelüfteten Filterzone mit einem Festbett behandelt wird. Der belüfteten Filterzone kommt dabei die Aufgabe zu, den biologischen Abbauprozess der normalen Belebtschlammzone fortzusetzen, während der unbelüfteten Filterzone die Aufgabe zukommt, wie in einer Nachklärung Abwasser und Schlamm zu trennen. Dabei enthalten nur die beiden Filterzonen kleine Partikelchen als Filtermedium, die aus Sand, Kunststoff, Anthrazit, Aktivkohle oder ähnlichen Materialien gebildet sein können. Solche Materialien als Filtermedium erlauben aber nur ein Ansammeln der auszufilternden Stoffe an der Oberfläche des Filtermediums. Die Ausfilterung feiner und feinster Feststoffe ist damit nicht möglich.

Der Erfindung liegt die Aufgabe zugrunde, ein Verfahren der eingangs genannten Art sowie eine Vorrichtung zur Durchführung des Verfahrens so auszugestalten, dass auf einfache und wirtschaftliche Weise eine weitgehend vollständige Trennung von gereinigtem Abwasser und Schlamm sowie die Ausfilterung auch feinster Feststoffe erreicht wird. Diese Aufgabe wird erfindungsgemäss dadurch gelöst, dass als Trägerteilchen flexible, offenzellig poröse Stoffe aus organischen Polymerverbindungen verwendet werden, die Filterzone im Normalbetrieb möglichst turbulenzarm gehalten wird und der Volumenanteil der Trägerteilchen in Bezug auf das Volumen der Filterzone auf 40 bis 80% eingestellt wird.

Durch die Schaffung einer Trägerteilchen enthaltenden Filterzone im Reaktor wird erreicht, dass die Beseitigung von im zulaufenden Abwasser enthaltenen Feststoffen sowie die Trennung von gereinigtem Abwasser und Schlamm bereits im Reaktor erfolgt. Dabei werden die Feststoffe und die Biomasse teilweise auf den leeren Trägerteilchen abgelagert und teilweise in den Zwischenräumen der Trägerteilchen zurückgehalten. Ist dann die Filterzone mit Feststoffen und Biomasse beladen, werden die Trägerteilchen im Bereich der Filterzone regeneriert. Die Regeneration kann aber auch, wie später noch gezeigt wird, kontinuierlich durchgeführt werden. Die bei der Regeneration der Trägerteilchen anfallende Biomasse kann als Überschussschlamm abgeführt oder zumindest teilweise als Rücklaufschlamm dem Reaktor wieder zugeleitet werden. Damit ist es möglich, ganz auf eine dem Reaktor nachgeschaltete Nachklärung zu verzichten oder bei überlasteten Anlagen die Nachklärung zu entlasten und eine möglichst vollständige Trennung von gereinigtem Abwasser und Schlamm zu erhalten.

Die Filterzone wird dabei im Normalbetrieb möglichst turbulenzarm gehalten und der Volumenanteil der Trägerteilchen in Bezug auf das Volumen der Filterzone auf 40 bis 80% eingestellt. Damit wird ein Aufreissen der Filterzone und die Bildung grosser Hohlräume im Filterbett vermieden, was ansonsten den Filtrationsvorgang negativ beeinflussen würde.

Als Trägerteilchen werden in der Filterzone des Reaktors und gegebenenfalls auch in der Behandlungszone flexible, offenzellige poröse Stoffe aus organischen Polymerverbindungen verwendet. Insbesondere Polyurethanschaumstoff oder -schaumgummi oder ähnliche Stoffe mit offenen Makroporen, wie sie in der kunststoffverarbeitenden Industrie anfallen, sind gut als Trägermaterial geeignet, wobei noch dazu Rest- und Abfallstücke zum Einsatz kommen können.

Solche offenporigen Stoffe sind bekanntlich dadurch gekennzeichnet, dass im Schaumstoffgerüst nur noch ein Teil der Zellwände vorhanden ist und die einzelnen Poren untereinander weitgehend in Verbindung stehen. Aufgrund dieser Zellwände entstehen im Schaumstoff zwischen einzelnen Poren Kanäle, deren Querschnitt von der Porengrösse bestimmt ist. Die Offenporigkeit der Trägerteilchen ergibt dabei ein hohes Wasseraufnahmevermögen. Die Grösse der einzelnen Trägerteilchen kann im Bereich von 0,5 bis 50 mm liegen. Diese Grösse der Trägerteilchen gewährleistet stabile Bakterienansammlungen sowie in der Behandlungszone eine Sauerstoffversorgung und einen Stofftransport bis ins Innere eines Trägerteilchens. Wird der Reaktor zum Umsatz von Kohlenstoffverbindungen oder als Nitrifikationsreaktor verwendet, können durch Auswahl der Grösse der Trägerteilchen im oberen Bereich der angegebenen Werte zusätzlich im Inneren der Trägerteilchen anoxische Zonen erzeugt werden, so dass dann in der Behandlungszone des Reaktors neben dem Abbau der Kohlenstoffverbindungen und der Nitrifikation auch Denitrifikationsvorgänge ablaufen können. Solche Denitrifikationsvorgänge können selbstverständlich aber auch in die Filterzone verlagert werden.

Um zusätzlich zu der Filter- und Abscheidefunktion in der Filterzone einen biologischen Restabbau durchführen zu können, ist es zweckmässig, die Filterzone im Normalbetrieb schwach zu begasen. Die Begasung sollte dabei jedoch möglichst wenig Turbulenzen in der Filterzone erzeugen, um ein Aufreissen des Filterbettes zu vermeiden.

Nach einer weiteren Ausführungsform des Verfahrens ist es ausserdem zur Aufrechterhaltung eines kontinuierlichen Beladungs- und Regeneriervorganges der Trägerteilchen vorteilhaft, in der Filterzone eine nach oben gerichtete Strömung des Abwasser-Belebtschlamm-Gemisches und eine nach unten gerichtete Wanderung der Trägerteilchen aufrechtzuerhalten und die Trägerteilchen zum Regenerieren vom unteren Bereich der Filterzone und gegebenenfalls vom unteren Bereich der Behandlungszone zum oberen Bereich der Filterzone zu fördern, durch Zusammenpressen von der Biomasse zu befreien und die von Biomasse befreiten Trägerteilchen zur Filterzone und gegebenenfalls zur Behandlungszone zurückzuleiten. Die Abwärtsströmung der teilweise leeren und somit schwimmfähigen Trägerteilchen wird durch das Gewicht einer aus dem Wasser ragenden Schüttung regenerierter Trägerteilchen erreicht. Die beim Zusammenpressen von den Trägerteilchen frei werdende Biomasse und die freigesetzten Feststoffe werden dabei gesammelt und als Überschussschlamm aus dem System abgezogen und/oder als Rücklaufschlamm zur Behandlungszone zurückgeleitet. Die Rückführung von Rücklaufschlamm kann entfallen, wenn das Regenerieren der beispielsweise über den Abwasserzulauf in die Behandlungszone zurückgeleiteten Trägerteilchen nur soweit erfolgt, dass beim Zusammenpressen der Trägerteilchen ausreichend Biomasse in den Poren der Trägerteilchen verbleibt. Dies kann z.B. dadurch erfolgen, dass in gewissen Zeitabständen das Zusammenpressen der Trägerteilchen nur auf ein bestimmtes Mass ihrer ursprünglichen Abmessungen durchgeführt wird und die so regenerierten Trägerteilchen dem Abwasserzulauf zugegeben werden, während die ansonsten möglichst vollständig ausgepressten Trägerteilchen nur in die Filterzone zurückgeleitet werden, so dass diese eine hohe Filterwirkung aufweisen.

Sowohl zum Unterstützen des Regeneriervorganges durch Zusammenpressen der Trägerteilchen als auch zum Regenerieren der Trägerteilchen ohne Zusammenpressen ist es weiterhin möglich, in der Filterzone zeitweise eine starke Begasung durchzuführen. Durch die starke Begasung werden dann die Trägerteilchen in der Filterzone durcheinander gewirbelt. Dies hat zur Folge, dass die zwischen den Trägerteilchen angelagerten Feststoffe sowie die auf den Trägerteilchen anhaftende Biomasse abgelöst werden.

Wird die Regenerierung ohne anschliessendes Zusammenpressen der Trägerteilchen nur durch verstärkte Gaszufuhr in die Filterzone durchgeführt, ist es dabei zweckmässig, die während der starken Begasung von den Trägerteilchen entfernte Biomasse durch zufliessendes Abwasser-Belebtschlamm-Gemisch und/oder durch zumindest teilweise durchgeführtes Schnellentleeren der Filterzone aus dieser auszutragen. Die aus der Filterzone ausgetragene, von den Trägerteilchen entfernte Biomasse enthaltende Flüssigkeit kann dem Vorklärbecken des Abwasserzulaufs oder einem Eindicker zugeführt werden.

Die verschiedenen Regenerationsmöglichkeiten – durch alleiniges Zusammenpressen der Trägerteilchen, durch heftiges Begasen der Filterzone und anschliessendes Zusammenpressen der Trägerteilchen und durch alleiniges heftiges Begasen der Filterzone – sind nicht auf bestimmte Reaktortypen beschränkt und lassen sich sowohl bei Ausbildung des Reaktors als volldurchmischtes Becken mit Filterzone als auch bei Ausbildung des Reaktors als Säulenreaktor mit Filterzone einsetzen.

Eine Vorrichtung zur Durchführung des Verfahrens umfasst einen Reaktor, in dem eine Behandlungszone und zur Abscheidung von Biomasse eine Trägerteilchen enthaltende Filterzone ausgebildet ist, und eine der Filterzone zugeordnete Regeneriereinrichtung für die Trägerteilchen mit Schlammablauf.

Erfindungsgemäss ist eine solche Vorrichtung dadurch gekennzeichnet, dass das Volumen der Filterzone ¼ bis ⅓ des Volumens der Behandlungszone beträgt, zumindest in der Filterzone Trägerteilchen aus flexiblen, offenzelligen Stoffen aus organischen Polymerverbindungen vorhanden sind, der Volumenanteil der Trägerteilchen in der Filterzone in Bezug auf das Volumen der Filterzone 40 bis 80% beträgt, die Regeneriereinrichtung für die Trägerteilchen eine mit der Filterzone und gegebenenfalls mit der Behandlungszone in Verbindung stehende Fördereinrichtung, eine Entwässerungseinrichtung und eine Presseinrichtung und für die freigesetzte Biomasse eine Auffangeinrichtung aufweist und dass an der Regeneriereinrichtung gegebenenfalls eine Rückführeinrichtung für die von Biomasse befreiten Trägerteilchen angeschlossen ist.

Der Schlammablauf kann eine Schlammrückleitung zur Behandlungszone und eine Überschussschlammableitung aufweisen. Die Rückführeinrichtung für die von Biomasse befreiten Trägerteilchen kann neben der Filterzone auch mit der Behandlungszone in Verbindung stehen, so dass regenerierte Trägerteilchen in die Filterzone und zusätzlich auch in die Behandlungszone zurückgeleitet werden können.

Sowohl zur Durchführung eines Restabbaus von Kohlenstoffverbindungen in der Filterzone als auch für die Regeneration der Trägerteilchen in der Filterzone ist es zweckmässig, wenn ausser in der Behandlungszone auch in der Filterzone eine Begasungseinrichtung angeordnet ist. Für den Restabbau kann dann eine geringe Begasung unter Vermeidung von Turbulenzen in der Filterzone und für die Regeneration der Trägerteilchen eine starke Begasung zur Erzielung eines Aufwirbelns der Trägerteilchen durchgeführt werden.

Je nach Schmutzstoffbelastung des Abwassers kann die Behandlungszone als volldurchmischtes Belebungsbecken, wobei im Belebungsbecken gegebenenfalls Trägerteilchen für die Biomasse vorhanden sein können, oder als Säulenreaktor ausgebildet sein.

Gemäss vorteilhafter Ausführungsformen der erfindungsgemässen Vorrichtung ist die Fördereinrichtung als Mammutpumpe ausgebildet und die Presseinrichtung kann mindestens zwei rotierende Presswalzen aufweisen, wobei die untere Presswalze mit Löchern versehen ist und dieser die Auffangeinrichtung zugeordnet ist.

In der Zeichnung sind zwei Ausführungsbeispiele einer Vorrichtung zur Durchführung des Verfahrens schematisch dargestellt, die nachstehend näher erläutert werden.

Es zeigt:

Fig. 1: ein volldurchmischtes Belebungsbecken mit integrierter Filterzone und Regeneriereinrichtung,

Fig. 2: einen Säulenreaktor mit integrierter Filterzone.

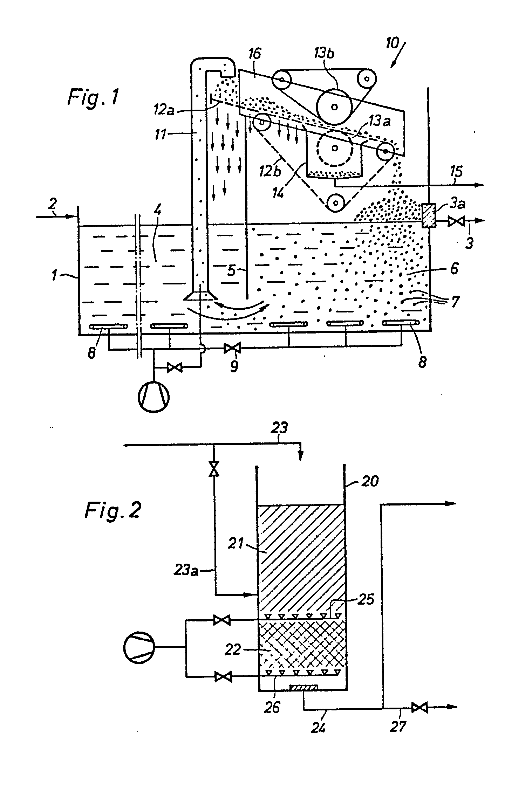

In der Fig. 1 ist mit 1 ein volldurchmischtes Belebungsbecken zur biologischen Behandlung von Abwasser bezeichnet, das einen Zulauf 2 für zu behandelndes Abwasser und einen am oberen Beckenrand angeordneten Ablauf 3 für behandeltes Abwasser aufweist. Innerhalb des Belebungsbeckens 1 ist eine Behandlungszone 4 und durch eine Tauchwand 5 getrennt davon eine Filterzone 6 ausgebildet, die ca. ¼ des Gesamtvolumens einnimmt. Zumindest in der Filterzone 6 sind dicht gepackt poröse Trägerteilchen 7, vorzugsweise aus flexiblem, offenzellig porösem Polyurethanschaumstoff, als Filtermedium für Feststoffe und Biomasse in einer solchen Menge vorhanden, dass 40 bis 80% des Volumens der Filterzone 6 mit Trägerteilchen ausgefüllt ist. Damit die Trägerteilchen nicht über den Ablauf 3 ausgetragen werden, ist diesem ein Sieb oder Gitter 3a zugeordnet, dessen Lochdurchmesser kleiner als die Trägerteilchen ist. Zur Steigerung der Biomassenkonzentration in der Behandlungszone 4 können auch in dieser Trägerteilchen für Biomasse in einer Menge angeordnet sein, die einem Volumenanteil der Behandlungszone von 20 bis 40% entspricht. Ausserdem sind sowohl in der Behandlungszone 4 als auch in der Filterzone 6 Begasungseinrichtungen 8 installiert, über die Luft und/oder Sauerstoff eingeleitet werden kann. Eine Begasung in der Filterzone 6 ist dabei nicht unbedingt notwendig, aber für den Restabbau von Kohlenstoffverbindungen zweckmässig. Dazu sollte die Begasung in der Filterzone 6 jedoch nur so stark eingestellt werden, dass möglichst keine Turbulenzen und damit ein Aufreissen des Filterbettes auftreten. Die Zuleitung zu den Begasungseinrichtungen 8 der Filterzone 6 ist zu diesem Zweck mit einem Einstellventil 9 versehen. Die Begasungseinrichtungen 8 selbst sind zweckmässigerweise so ausgebildet, dass eine mittel- bis grobblasige Begasung möglich ist. Bei grossen Gasdurchsatzmengen, wie sie gegebenenfalls zur Regeneration der Trägerteilchen erforderlich sein können, arbeiten solche Begasungseinrichtungen wirtschaftlicher. Ausserdem sind sie weitgehend wartungsfrei, da sie nicht so leicht verstopfen.

Zur Regeneration der Trägerteilchen 7 ist oberhalb der Filterzone 6 eine Regeneriereinrichtung 10 angeordnet, der eine Fördereinrichtung 11, eine Entwässerungseinrichtung 12, eine Presseinrichtung 13 und eine Auffangeinrichtung 14 für freigesetzte Biomasse zugeordnet ist. Die Fördereinrichtung 11 kann beispielsweise als Mammutpumpe oder als Trog- und Kettenfördereinrichtung ausgebildet sein und ist in der Behandlungszone 4 nahe der Tauchwand 5, die die Behandlungszone 4 von der Filterzone 6 trennt, angeordnet. Durch diese Anordnung der Fördereinrichtung 11 können sowohl die Trägerteilchen 7 aus der Filterzone 6 als auch gegebenenfalls Trägerteilchen aus der Behandlungszone 4 zur Regeneriereinrichtung 10 gefördert werden, wobei die Trägerteilchen 7 aus der Filterzone 6 durch eine zwischen dem Boden des Belebungsbeckens 1 und der Tauchwand 5 ausgebildete Spaltöffnung von der Fördereinrichtung 11 ausgesaugt werden. Am oberen Ende der Fördereinrichtung 11 fallen die Trägerteilchen dann zunächst auf eine als schiefe Ebene ausgebildete, perforierte Rutsche 12a, die als Vorentwässerungszone dient und über der Tauchwand 5 so angeordnet ist, dass das abfliessende Wasser vorwiegend in die Behandlungszone 4 gelangt. Anschliessend an die Rutsche 12a ist ein umlaufendes, perforiertes Förderband 12b angeordnet, das als Nachentwässerungszone dient und die Trägerteilchen der Presseinrichtung 13, die im Gegensinn rotierende Presswalzen 13a und 13b aufweist, zuführt. Um eine störungsfreie Zuführung der Trägerteilchen zu den Presswalzen 13a, 13b zu erhalten, ist zusätzlich der oberen Presswalze 13b ein wasserundurchlässiges Förderband zugeordnet, das vor den Presswalzen 13a, 13b in einem spitzen Winkel zu dem unteren, perforierten Förderband 12b verläuft. Seitlich der Förderbänder und Presswalzen sind Leitbleche 16 angeordnet.

Durch die Gegenbewegung der Presswalzen 13a und 13b und den Walzendruck, der gegebenenfalls mit Hilfe von Federn oder ähnlichem erzeugt wird, werden die Trägerteilchen auf 5 bis 30% ihres ursprünglichen Volumens komprimiert und die anhaftenden Feststoffe, Bakterien und Flüssigkeiten ausgepresst. Die regenerierten Trägerteilchen werden dann von dem Förderband 12b, das zwischen den Presswalzen 13a und 13b hindurchgeht, in die Filterzone 6 zurücktransportiert. Sofern auch Trägerteilchen in der Behandlungszone 4 vorhanden sind, kann ein Teil der regenerierten Trägerteilchen auch zum Zulauf 2 des Belebungsbeckens 1 abgezogen werden. Die von den Trägerteilchen beim Auspressen entfernten Feststoffe, Bakterien und Flüssigkeiten gelangen in einen unterhalb der beiden Presswalzen 13a und 13b angeordneten Auffangbehälter 14, wozu die untere Presswalze 13a vorteilhafterweise perforiert ausgebildet ist. Der Durchmesser der Löcher der unteren Presswalze 13a ist dabei ebenso wie der Lochdurchmesser des Förderbandes 12b so zu wählen, dass nur das mit Feststoffen und Bakterien beladene Wasser abläuft, nicht aber die Trägerteilchen hindurchfallen können. Dies wird mit einem Lochdurchmesser von 2 bis 10 mm erreicht. Die Anzahl der Löcher sollte vorteilhafterweise 1 bis 5/10 cm² betragen. An den Auffangbehälter 14 ist ein Schlammablauf 15 angeschlossen, der zur Weiterbehandlung des anfallenden Schlamms beispielsweise mit einem Eindicker in Verbindung steht.

Zur Auflockerung der Trägerteilchen in der Filterzone 6 besteht bei einer eventuell auftretenden Verlegung des Filters die Möglichkeit, über die in der Filterzone 6 vorhandenen Begasungseinrichtungen 8 kurzzeitig in verstärktem Mass Gas einzutragen. Unter Umständen ist ein solcher verstärkter Gaseintrag auch schon für eine Regeneration der Trägerteilchen ausreichend, so dass auf eine spezielle Regeneriereinrichtung verzichtet werden kann. Stattdessen müsste dann dem Belebungsbecken zumindest nahe des Bodens der Filterzone ein Schlammablauf mit Sieb oder Gitter zugeordnet werden, über den dann die beim Aufwirbeln der Trägerteilchen infolge des verstärkten Gaseintrags von diesen abgetrennte Biomasse und die abgetrennten Feststoffe ausgetragen werden können. Weiterhin müsste die Filterzone durch ein Überfallwehr von der Behandlungszone getrennt sein, um ein Leerlaufen der Behandlungszone zu verhindern.

In der Fig. 2 ist ein Säulenreaktor 20 mit integrierter Filterzone 21 dargestellt, der ohne gesonderte Regeneriereinrichtung arbeitet. Der Säulenreaktor 20 wird in diesem Fall von oben nach unten von der zu behandelnden Flüssigkeit durchströmt. Dazu ist im oberen Bereich ein Zulauf 23 sowie im Boden ein Ablauf 24 für behandelte Flüssigkeit angeordnet und die Filterzone 22, die zu 60 bis 80% mit Trägerteilchen gefüllt ist, im unteren Bereich des Säulenreaktors 20 ausgebildet, während sich die Behandlungszone 21, die zu 40 bis 60% mit Trägerteilchen gefüllt ist, darüber befindet. Sowohl der Behandlungszone 21 als auch der Filterzone 22 ist eine Begasungseinrichtung 25, 26 zugeordnet, wobei die Gaszufuhr zu den Begasungseinrichtungen 25, 26 über Einstellventile in der Stärke variabel ist. In der Regel wird die Filterzone 22 nicht oder nur schwach begast, während die Behandlungszone 21 entsprechend der $O_2$-Zehrung stark begast wird.

Für die Regeneration der beladenen Trägerteilchen wird der Ablauf 24 vom Säulenreaktor 20 abgesperrt und die Trägerteilchenkonzentration durch Anstauen verdünnt. Gleichzeitig wird die Gaszufuhr zu den Begasungseinrichtungen 25, 26 erhöht. Durch das damit verbundene Aufwirbeln der Trägerteilchen werden die anhaftenden Feststoffe und die anhaftende Biomasse abgelöst. Nach einer gewissen Regenerierzeit wird dann der Ablauf 24 geöffnet, so dass die abgelösten Stoffe ausgetragen werden. Damit die ausgetragenen Stoffe nicht die Ablaufwerte des Säulenreaktors 20 beeinflussen, ist dem Ablauf 24 eine Zweigleitung 27 mit Absperrventil zugeordnet, über die dann die ausgetragenen Stoffe zum Vorklärbecken oder zu einem Eindicker geleitet werden. Nach dem Ausspülen des Säulenreaktors 20 wird die Zweigleitung 27 abgesperrt und das den Säulenreaktor 20 verlassende gereinigte Abwasser gelangt wieder in den normalen Ablauf.

Damit in der Filterzone 22 gegebenenfalls auch bei abgestellter Gaszufuhr Denitrifikationsvorgänge ablaufen können, ist dem Zulauf 23 eine Zweigleitung 23a zugeordnet, die direkt oberhalb der Filterzone in den Säulenreaktor 20 mündet.

Neben der Ausbildung eines Säulenreaktors ohne Regeneriereinrichtung besteht selbstverständlich auch die Möglichkeit, einen Säulenreaktor entsprechend der in Fig. 1 für ein Belebungsbecken gezeigten Anordnung mit einer entsprechenden Regeneriereinrichtung zu versehen.

**Patentansprüche**

1. Verfahren zur biologischen Reinigung von Abwasser, bei dem das Abwasser in einem Reaktor in Gegenwart von Schlamm gegebenenfalls unter Begasung mit Luft und/oder Sauerstoff behandelt, anschliessend das Abwasser-Belebtschlamm-Gemisch nach der Behandlungszone durch eine im Reaktor vorhandene, Trägerteilchen enthaltende Filterzone zwecks Abscheidung der Biomasse auf den Trägerteilchen geleitet wird, die beladenen Trägerteilchen im Bereich der Filterzone regeneriert werden und gereinigtes Abwasser sowie von den Trägerteilchen bei der Regenerierung entfernte Biomasse getrennt aus der Filterzone abgezogen werden, dadurch gekennzeichnet, dass als Trägerteilchen flexible, offenzellig poröse Stoffe aus organischen Polymerverbindungen verwendet werden, die Filterzone im Normalbetrieb möglichst turbulenzarm gehalten wird und der Volumenanteil der Trägerteilchen in Bezug auf das Volumen der Filterzone auf 40 bis 80% eingestellt wird.

2. Verfahren nach Anspruch 1, dadurch gekennzeichnet, dass die Filterzone im Normalbetrieb schwach begast wird.

3. Verfahren nach Anspruch 1 oder 2, dadurch gekennzeichnet, dass in der Filterzone eine nach oben gerichtete Strömung des Abwasser-Belebtschlamm-Gemisches und eine nach unten gerichtete Wanderung der Trägerteilchen aufrechterhalten wird und dass die Trägerteilchen zum Regenerieren vom unteren Bereich der Filterzone und gegebenenfalls vom unteren Bereich der Behandlungszone zum oberen Bereich der Filterzone gefördert, durch Zusammenpressen von der Biomasse befreit und die von Biomasse befreiten Trägerteilchen zur Filterzone und gegebenenfalls zur Behandlungszone zurückgeleitet werden.

4. Vorrichtung zur Durchführung des Verfahrens nach einem der Ansprüche 1 bis 3 mit einem Reaktor, in dem eine Behandlungszone und zur Abscheidung von Biomasse eine Trägerteilchen enthaltende Filterzone ausgebildet ist, und mit einer der Filterzone zugeordneten Regeneriereinrichtung für die Trägerteilchen mit Schlammablauf, dadurch gekennzeichnet, dass das Volumen der Filterzone (6, 22) ¼ bis ⅓ des Volumens der Behandlungszone (4, 21) beträgt, zumindest in der Filterzone Trägerteilchen aus flexiblen, offenzelligen Stoffen aus organischen Polymerverbindungen vorhanden sind, der Volumenanteil der Trägerteilchen in der Filterzone in Bezug auf das Volumen der Filterzone 40 bis 80% beträgt, die Regeneriereinrichtung (10) für die Trägerteilchen eine mit der Filterzone (6) und gegebenenfalls mit der Behandlungszone (4) in Verbindung stehende Fördereinrichtung (11), eine Entwässerungseinrichtung (12) und eine Presseinrichtung (13) und für die freigesetzte Biomasse eine Auffangeinrichtung (14) aufweist und dass an der Regeneriereinrichtung (10) gegebenenfalls eine Rückführeinrichtung für die von Biomasse befreiten Trägerteilchen angeschlossen ist.

5. Vorrichtung nach Anspruch 4, dadurch gekennzeichnet, dass die Fördereinrichtung (11) als Mammutpumpe ausgebildet ist.

6. Vorrichtung nach Anspruch 4 oder 5, dadurch gekennzeichnet, dass die Presseinrichtung (13) mindestens zwei rotierende Presswalzen (13a, 13b) aufweist, dass die untere Presswalze (13a) mit Löchern versehen ist und dass der unteren Presswalze (13a) die Auffangeinrichtung (14) zugeordnet ist.

**Claims**

1. A process for the biological purification of waste water, in which the waste water is treated in a reactor in the presence of sludge if necessary with aeration with air and/or oxygen, the mixture of waste water and activated sludge is subsequently passed after the treatment zone through a filter zone in the reactor consisting of carrier particles for the purpose of depositing the biomass on the carrier particles for the purpose of depositing the biomass on the carrier particles, the charged carrier particles are regenerated in the region of the filter zone and purified waste water and biomass, which has been removed from the carrier particles during the regeneration, are separately withdrawn from the filter zone, characterised in that flexible, open-cell, porous substances made of organic polymeric compounds are used as carrier particles, the filter zone in normal operation is kept so as to be as free from turbulence as possible, and the volume of the carrier particles in relation to the volume of the filter zone is set at 40 to 80%.

2. A process as claimed in Claim 1, characterised in that the filter zone is weakly aerated during normal operation.

3. A process as claimed in Claim 1 or Claim 2, characterised in that an upwardly directed flow of the mixture of waste water and activated sludge and a downwardly directed movement of the carrier particles is maintained in the filter zone; and that for regeneration, the carrier particles are advanced from the lower region of the filter zone and, if necessary, from the lower region of the treatment zone, to the upper region of the filter zone, and freed from the biomass by compression, and the carrier particles freed from the biomass are returned to the filter zone and, if necessary, to the treatment zone.

4. Apparatus for carrying out the process as claimed in one of Claims 1 to 3 comprising a reactor in which a treatment zone and a filter zone containing carrier particles for the separation of biomass are formed, and a regeneration device for the carrier particles allotted to the filter zone having a sludge outlet, characterised in that the volume of the filter zone (6, 22) is from ¼ to ⅓ of the volume of the treatment zone (4, 21); that carrier particles are provided, at least in the filter zone, made of flexible, open-cell materials consisting of organic polymer compounds; that the volume of the carrier particles in the filter zone is 40 to 80% of the volume of the filter zone; the regeneration device (10) for the carrier particles has a conveying device (11) which is connected to the filter zone (6) and if necessary to the treatment zone (4), a drainage device (12), a pressing device (13) and a collecting device (14) for the released biomass; and that a returning device for the carrier particles freed from biomass is if necessary connected to the regeneration device (10).

5. Apparatus as claimed in Claim 4, characterised in that the conveying device (11) is in the form of an air-lift pump.

6. Apparatus as claimed in Claim 4 or Claim 5, characterised in that the pressing device (13) has at least two rotating press rollers (13a, 13b); that the lower press roller (13a) is provided with openings; and that lower press roller (13a) is allotted to the collecting device (14).

**Revendications**

1. Procédé d'épuration biologique des eaux résiduaires, selon lequel l'eau résiduaire est traitée dans un réacteur en présence de boue, le cas échéant, avec adduction de gaz tel que de l;air et/ou de l'oxygène, ensuite le mélange d'eau résiduaire et de boue activée est canalisé, après son passage par la zone de traitement, à travers une zone de filtration se trouvant dans le réacteur et contenant des particules porteuses, en vue d'une séparation de la biomasse déposée sur les particules porteuses, les particules porteuses chargées sont régénérées dans la zone de filtration et l'eau résiduaire épurée ainsi que la biomasse séparée des particules porteuses lors de la régénération sont évacués séparément de la zone de filtration, caractérisé en ce que, comme particules porteuses, on utilise des matières poreuses flexibles à cellules ouvertes constituées de composés polymères organiques, en ce qu'on réduit autant que possible la turbulence dans la zone de filtration, en service normal et en ce qu'on ajuste la proportion volumique des particules porteuses par rapport au volume de la zone de filtration à une valeur comprise entre 40 et 80%.

2. Procédé selon la revendication 1, caractérisé en ce que la zone de filtration est légèrement alimentée en gaz service normal.

3. Procédé selon la revendication 1 ou 2, caractérisé en ce qu'on entretient dans la zone de filtration un écoulement ascendant du mélange d'eau résiduaire et de boue activée ainsi qu'une progression descendante des particules porteuses et en ce que les particules porteuses sont transférées, en vue de la régénération, d'une région inférieure de la zone de filtration, et le cas échéant d'une région inférieure de la zone de traitement, vers une région supérieure de la zone de filtration, sont libérées de la biomasse par compression et les particules porteuses libérées de la biomasse sont renvoyées vers la zone de filtration et, le cas échéant, vers la zone de traitement.

4. Appareillage pour la mise en œuvre du procédé selon une des revendications 1 à 3, comportant un réacteur dans lequel il est prévu une zone de traitement et, pour la séparation de la biomasse, une zone de filtration contenant des particules porteuses, ainsi qu'un dispositif de régénération des particules porteuses avec évacuation de la boue, ce dispositif étant associé à la zone de filtration, caractérisé en ce que le volume de la zone de filtration (6, 22) est compris entre ¼ et ⅓ du volume de la zone de traitement (4, 21), en ce que des particules porteuses formées de matières flexibles à cellules ouvertes formées de composés polymères organiques sont présentes au moins dans la zone de filtration, la proportion volumique des particules porteuses dans la zone de filtration par rapport au volume de la zone de filtration s'élève à 40 à 80%, le dispositif de régénération (10) des particules porteuses comporte un dispositif de transport (11) en communication avec la zone de filtration (6) et le cas échéant avec la zone de traitement (4), un dispositif de déshydratation (12) et un dispositif de compression (13) et un dispositif récepteur (14) de la biomasse libérée et en ce que le dispositif de régénération (10) est relié le cas échéant à un dispositiv de recyclage des particules porteuses libérées de la biomasse.

5. Appareillage selon la revendication 4, caractérisé en ce que le dispositif de transport (11) est agencé comme une pompe mammouth.

6. Appareillage selon la revendication 4 ou 5, caractérisé en ce que le dispositif de compression (13) comporte au moins deux rouleaux presseurs rotatifs (13a, 13b), en ce que le rouleau presseur inférieur (13a) est pourvu de trous et en ce que le rouleau presseur inférieur (13a) est associé au dispositif récepteur (14).

Fig.1

Fig.2